# EUROPEAN PATENT SPECIFICATION

(11) **EP 0 518 438 B1**
(45) Date of publication and mention of the grant of the patent: **19.03.1997**
(21) Application number: 92201684.5
(22) Date of filing: 10.06.1992
(51) Int. Cl.: A01K 1/01

(54) **A method and a device for the ecological separation, purification and processing of liquid manure**
Verfahren und Vorrichtung zur ökologischen Trennung, Reinigung und Verarbeitung von Flüssigmist
Procédé et installation pour la séparation écologique, la purification et le traitement de fumier.

(30) Priority: 14.06.1991 NL 9101030
(43) Date of publication of application: 16.12.1992
(73) Proprietor: Van der Wijngaart, Adriaan Johannes Hubertus, NL-4841 GJ Prinsenbeek (NL)
(72) Inventor: Van der Wijngaart, Adriaan Johannes Hubertus, NL-4841 GJ Prinsenbeek (NL)
(74) Representative: Hatzmann, Marinus J.

(56) References cited:
- EP-A- 0 022 596
- EP-A- 0 498 084
- NL-A- 7 903 449
- US-A- 4 227 486

## Description

The present invention relates to a method for collecting, separating and processing fluid manure, proceeding from cattle stock undertakings.
It is relating also to an appliance for such a method and to accessories for same.
The intensive and efficient cattle stable keeping as practised in Western Europe causes overplus of fluid manure material in an ever increasing rate such that it can not be put down any more upon agriculture soil, as done earlier.
With such a handling notably an overfertilization will occur, causing impediments for the environment, and disturbance of the ecological balance.

The gathering, separation and processing in a profitable way of the large quantities of manure of cattle farms is such a problem, that it requires for a proper solution.
Thereby it should be avoided in particular, that undesirable and detrimental components could come into surface waters, undergroud water or into the collecting drains of sewer systems.

For the evaluation of discharge, carrying off and processing systems the chemical oxygen deficiency of the fluid manure is an important criterion.
This gives an indication for the necessary manner of decomposition.

Moreover it should be endeavoured to significantly reduce the over-burdening by nitrogen-and phosphorus-compounds.

This aim cannot be reached by the known process methods in a satisfactory way. Nitrogen compounds and any organic substances are only prone to degradability down as nitrogen, carbondioxide, methane and water, by means of biological processes. For methane-fermentation the ammonia of the urine ought to be removed as much as possible.
The sulpher contents is also annoying, because therfrom the poisonous hydrogen-sulphide is arising. If this is oxidised to sulphates the insoluble gypsum is produced.

The removal of the phosphorus in the form of phosphates can be carried out by chemical precipitation or also by performing a biological process.

Bacteria and fungus growth deliver a removal of harmful compounds by aerobic decomposition, and anaerobic bacteria perform the same by metabolisms under exclusion of oxygen.

In EP-A 22596 it has been proposed to separate liquid and solid constituents of the dung from each other as soon as possible , and the liquid constituents are discharged elsewhere as soon as possible. An arrangement is disclosed comprising a dung interceptor at least part of which slopes locally, the lowest portion being connected with a liquid discharge device.

In the livery stable the cattle stand upon a grid floor. Such a floor has grate-shaped slots, which allow urine and manure to pass through.
Under said grids there is a gutter and pit, wherin the manure and urine are caught. However , since the organic matter is dissolving in the urine, a liquid manure mass comes into being, which must be removed and be separated and processed in a useful way.
According to the present invention, the separation is carried out in an equipment, comprising a grid-shaped floor having underneath therof, along the entire length, a decending gutter with sloped walls of concrete, glass reinforced polyester, steel or aluminium, both covered untill the upperside with a lag of non-sticking material, wherby between said walls at least one conveyor belt is equipped, which has a longitudinal and a cross slope of 2-10 o, and is provided with a raised rim at the lower edge, and is descending downwards to a first receptacle, into which the liquid flows, while the solid material can be moved upon said conveyor belt and conducted into a second receptacle or container.

The conveyors or conveyors are driven continuously or intermittently, and are reversing by means of the rollers at the ends. The liquid is flowing to the lowest point, i.e. into a first container, and the solids are received in a second container at the end.
The separating conveyor belt has a non-sticking flexible surface, preferable of rubber or canvass or (glas)fiber-reinforced polyester, with a coating of a moisture-repellent plastic. Upon this surface the manure can be moved on to the conntainers, while simultaneously the separation of the solids from the liquid takes place upon the sloped belt, having a collateral angle of 2-10 o.

As non-adhering material polypropylene, polyethylene, silicone or polyfluorethylen can be used.
The belt can be driven either intermittently or continuously in the described direction.
In this manner two receptacles are being filled, one containing the liquid, and the other containing solid material.
At the end of the belt a scraper bar is mounted, in order to guide the solid material after the separation from the belt into the receptacle destined for it.
The liquid material contains but water also mainly inorganic and organic salts, which can be digested by vegetation in a bassin.
By pumping over into a receptacle provided with semi-permeable membranes, pure water can be recovered from it, e.g. by reverse osmosis.
The solid material can be subjected to composting, in a cistern or trough wherein, e.g. by addition of an enzyme, such as phytase, and mixing with lime, a suitable basic material for vegetable cultivation earth can be produced.
The sybiosis of bacteria, fungi, enzymes and oxigen in the layer root-striking reed-plants results in an ecological purification system, wherby the material can be used either as cultivation earth or, in dried form, as a basis for cattle feed grains or similar products.
The solid material obtained by drying might be used for other puposes as well, e.g. as fertilizer granules, which supplied with lime dissolve slowly during rain.
The invention is further elucidated on the basis of the annexed drawings.

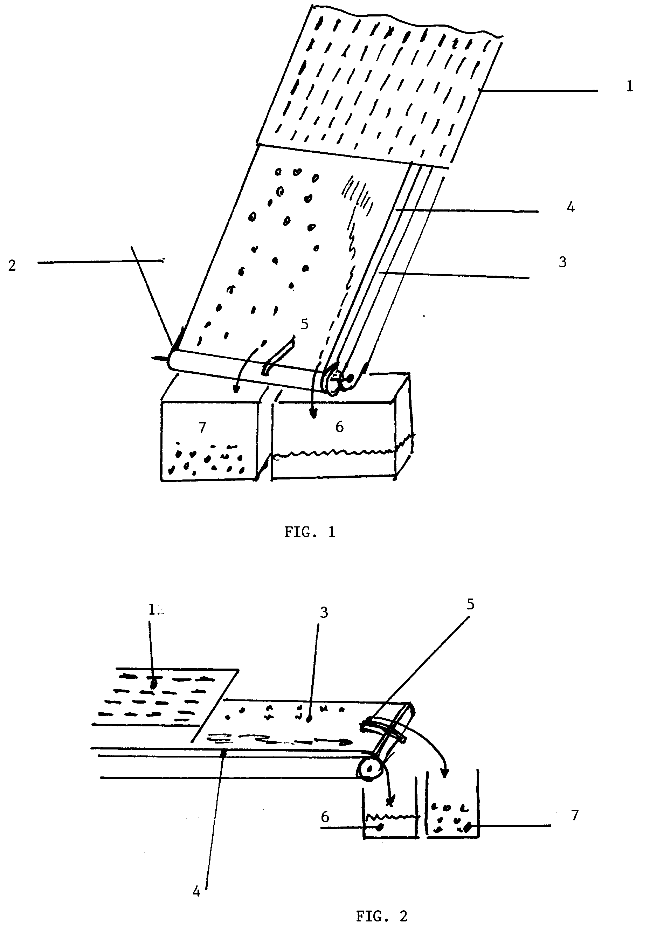

In figure 1 a perspective view of the device according to the invention is shown. Therein (1) is the grid in the floor, (2) is the coating of the sloping walls, (3) is the conveyor belt of the non-sticking flexible material, having a raised rim (4) at its lower edge; (5) is the scraper accessory, (6) is a first receptacle for the liquid, and (7) is a second receptacle for the solid material.

Figure 2 shows schematically the separation-and processing steps for the separation of sewage into liquid and dry solid material, suitable for compost or for other purposes.

The invention is not restricted to the embodiments of the parts shown, but it extends to the sequence of the applied steps, as defined in the claims.

## Claims

1. An equipment for the ecological separation, purification and processing of liquid/manure, in stables for cattle, said equipment comprising a grid-shaped floor (1) having underneath thereof, along the entire length, a descending gutter with sloped walls (2) of concrete, glass-reinforced polyester, steel or aluminium, both covered until the upper side with a lag of non-sticking flexible material, whereby between said walls (2) at least one conveyor belt (3) is equipped, which has a longitudinal and a cross slope of 2-10°, and is provided with a raised rim (4) at the lower edge, and is descending downwards to a first receptacle (6), into which the liquid flows, while the solid material can be moved upon said conveyor belt (3) and conducted into a second receptacle or container (7).

2. An equipment according to claim 1, characterized in that the conveyor belt (3) is of non-sticking material and consists of canvass or rubber with a surface layer of water-repellent plastics material.

3. An equipment according to claim 1, characterized in that the surface layer consists of polypropylene or polyethylene.

4. An equipment according to claim 1, characterized in that the surface layer consists of a silicone-polymer.

5. A method for the ecological separation, purification and processing of liquid/manure, using the equipment of claims 1-4, wherein the manure is conducted into a gutter having a non-sticking lag, in which gutter at least one conveyor belt (3) with a slope leads to a receptacle (7), wherein the solid material is collected, while the liquid part flows along the raised rim (4) of the belt into a separate container (6).

6. A method according to claim 5, characterized in that the solid part of the material is conducted by a scraper (5), from the oblique sloping conveyor belt (3) into the receptacle (7) destined for same.

7. A method according to claim 6, characterized in that the liquid and the manure are purified each in an individual cistern by means of activity of fungi, aerobic bacteria and (in the lowest layer part) with anaerobic bacteria.

## Patentansprüche

1. Vorrichtung zum ökologischen Separieren, Reinigen und Verarbeiten von Flüssigkeiten/Dung in Viehställen, wobei die Vorrichtung aufweist: einen rostförmigen Boden (1) unter dem sich über die gesamte Länge eine abfallende Ablaufrinne mit geneigten Wänden (2) aus Beton, glasverstärktem Polyester, Stahl oder Aluminium erstreckt, wobei beide bis zur Oberseite hin mit einer Schicht aus flexiblen Anti-Haftmaterials bedeckt sind, wobei zwischen den Wänden (2) wenigstens ein Förderband (3) vorgesehen ist, das in Längs- und in Querrichtung eine Neigung von 2-10° aufweist, an der Unterkante mit einem erhöhten Rand (4) versehen ist, und zu einem ersten Behälter (6) abfallt, in den die Flüssigkeit fließt, während das feste Material aufdem Förderband (3) transportiert und zu einem zweiten Behälter oder Container (7) geleitet werden kann.

2. Vorrichtung nach Anspruch 1, dadurch gekennzeichnet, daß das Förderband (3) aus Anti-Haftmaterial besteht und aus Leinwand oder Gummi mit einer Oberflächenschicht aus wasserabweisendem Kunststoffmaterial besteht.

3. Vorrichtung nach Anspruch 1, dadurch gekennzeichnet, daß die Oberflächenschicht aus Polypropylen oder Polyethylen besteht.

4. Vorrichtung nach Anspruch 1, dadurch gekennzeichnet, daß die Oberflächenschicht aus einem Silikon-Polymer besteht.

5. Verfahren zum ökologischen Separieren, Reinigen und Verarbeiten von Flüssigkeit/Dung, unter Verwendung der Vorrichtung nach den Ansprüchen 1-4, wobei der Dung in eine Ablaufrinne mit einer Anti-Haftbeschichtung geleitet wird, in der wenigstens ein geneigtes Förderband (3) zu einem Behälter (7) führt in dem das feste Material gesammelt wird, während der flüssige Anteil entlang dem erhöhten Rand (4) des Bandes in einen separaten Container (6) fließt.

6. Verfahren nach Anspruch 5, dadurch gekennzeichnet, daß der feste Anteil des Materials durch einen Schaber (5) von dem schiefen, geneigten Förderband (3) in den dafür vorgesehenen Behälter (7) geleitet wird.

7. Verfahren nach Anspruch 6, dadurch gekennzeichnet, daß die Flüssigkeit und der Dung jeweils in einer eigenen Zisterne durch die Aktivitäten von Pilzen, aeroben Bakterien und (im Bereich der untersten Schicht) anaeroben Bakterien gereinigt werden.

## Revendications

1. Appareil de séparation, purification et traitement écologique de fumier et de liquide, dans les étables à bovins, l'appareil comprenant un plancher (1) en forme de grille ayant au-dessous, sur toute sa longueur, une goulotte descendante ayant des parois inclinées (2), formées de béton, de polyester armé de verre, d'acier ou d'aluminium, tous deux couverts jusqu'au côté supérieur par un garnissage d'un matériau flexible non collant, une courroie transporteuse au moins (3) étant placée entre les parois (2) et ayant une orientation longitudinale et une orientation transversale de 2 à 10°, et comprenant un rebord en saillie (4) au bord inférieur et descendant vers un premier réceptacle (6) dans lequel e'écoule le liquide alors que le matériau solide peut être déplacé sur la courroie transporteuse (3) et conduit vers un second réceptacle ou récipient (7).

2. Appareil selon la revendication 1, caractérisé en ce que la courroie transporteuse (3) d'un matériau non collant est constituée de toile ou de caoutchouc ayant une couche de surface de matière plastique hydrofuge.

3. Appareil selon la revendication 1, caractérisé en ce que la couche de surface est formée de polypropylène ou de polyéthylène.

4. Appareil selon la revendication 1, caractérisé en se que la couche de surface est constituée d'un polymère de silicone.

5. Procédé de séparation, purification et traitement écologique de fumier et de liquide, à l'aide de l'appareil des revendications 1 à 4, dans lequel le fumier est conduit dans une goulotte ayant un garnissage non collant, une courroie transporteuse au moins (3) ayant une pente rejoignant un réceptacle (7) étant placée dans la goulotte, le matériau solide étant collecté dans le réceptacle alors que la partie liquide s'écoule le long du rebord en saillie (4) de la courroie dans un récipient séparé (6).

6. Procédé selon la revendication 5, caractérisé en ce que la partie solide du matériau est conduite par un racloir (5) de la courroie transporteuse (3) inclinée sur le côté vers le réceptacle (7) qui lui est destiné.

7. Procédé selon la revendication 6, caractérisé en ce que le liquide et le fumier sont purifiés chacun dans une citerne individuelle par l'activité de champignons, de bactéries aérobies et (dans la partie formant la couche la plus profonde) par des bactéries anaérobies.
